Europäisches Patentamt

European Patent Office

Office européen des brevets

(19)

(11) **EP 0 915 002 A1**

(12) **EUROPÄISCHE PATENTANMELDUNG**

(43) Veröffentlichungstag:
    **12.05.1999 Patentblatt 1999/19**

(51) Int. Cl.⁶: **B62D 1/20**, F16D 3/26,
    B62D 3/02

(21) Anmeldenummer: 97810839.7

(22) Anmeldetag: **07.11.1997**

(84) Benannte Vertragsstaaten:
    **AT BE CH DE DK ES FI FR GB GR IE IT LI LU MC NL PT SE**
    Benannte Erstreckungsstaaten:
    **AL LT LV MK RO SI**

(71) Anmelder: **Wandfluh AG**
    **3714 Frutigen (CH)**

(72) Erfinder: **Bernhard, Ernst**
    **CH-2558 Aegerten (CH)**

(74) Vertreter:
    **Roshardt, Werner Alfred, Dipl.-Phys. et al**
    **Keller & Partner**
    **Patentanwälte AG**
    **Zeughausgasse 5**
    **Postfach**
    **3000 Bern 7 (CH)**

(54) **Fahrzeuglenkung**

(57) Eine Fahrzeuglenkung mit variablem Übersetzungsverhältnis hat ein Lenkgetriebe (10), das ein um eine erste Drehachse (50) drehbares Antriebsglied (20) aufweist, welches über ein Zwischenglied (30) mit einem um eine zweite Drehachse (52) drehbaren Abtriebsglied (40) gekuppelt ist. Das Antriebsglied (20) ist um eine dritte Drehachse (54) schwenkbar am Zwischenglied (30) und dieses um eine vierte Drehachse (56) schwenkbar am Abtriebsglied (40) angelenkt. Zur Erzeugung der Variabilität des Übersetzungsverhältnisses ist das Antriebsglied (20) bezüglich des Abtriebsgliedes (40) derart angeordnet, dass die erste Drehachse (50) bezüglich der zweiten Drehachse (52) einen Winkel (K) einschliesst. Das Lenkgetriebe (10) besteht im wesentlichen bloss aus einem Antriebsglied (20), einem Zwischenglied (30) und einem Abtriebsglied (40) sowie aus Gelenkmitteln zur schwenkbaren Anlenkung des Antriebsgliedes (20) am Zwischenglied (30) und des Zwischengliedes (30) am Abtriebsglied (40). Das erfindungsgemässe Lenkgetriebe (10) weist somit eine äusserst einfache Konstruktion auf. Bei Verwendung geeigneter Gelenkmittel ist das erfindungsgemässe Lenkgetriebe (10) über den gesamten Lenkbereich im wesentlichen spielfrei einstellbar.

Fig. 1

# Beschreibung

## Stand der Technik

Die Erfindung befasst sich mit einer Fahrzeuglenkung (Vorrichtung zum Lenken eines Fahrzeuges) des Typs, welcher es gestattet, das Übersetzungslsverhältnis für die Übersetzung zwischen der Steuerbewegung einer Lenkungsbetätigungsvorrichtung und der gesteuerten Bewegung der mittels der Lenkung gelenkten Fahrzeugkomponenten zu variieren, wobei die Variabilität des Übersetzungsverhältnisses im wesentlichen durch ein Lenkgetriebe erzeugt wird. Das Lenkgetriebe umfasst ein Antriebsglied und ein Abtriebsglied und übersetzt eine Bewegung des Antriebsgliedes in eine Bewegung des Abtriebsgliedes, wobei das Übersetzungsverhältnis variabel ist. Das Antriebsglied des Lenkgetriebes ist mit der Lenkungsbetätigungsvorrichtung gekoppelt, wobei ein allfällig vorhandenes Übersetzungsverhältnis zwischen der Bewegung der Lenkungsbetätigungsvorrichtung und derjenigen des Antriebsgliedes im wesentlichen konstant ist. Das Abtriebsglied des Lenkgetriebes ist mit den gelenkten Fahrzeugkomponenten gekoppelt, wobei wiederum ein allfällig vorhandenes Übersetzungsverhältnis zwischen der Bewegung des Abtriebsgliedes und derjenigen der gelenkten Fahrzeugkomponenten im wesentlichen konstant ist.

Im nachfolgenden ist unter einem Fahrzeug im allgemeinen irgend ein Fahrzeug (Landfahrzeug, Wasserfahrzeug, Luftfahrzeug, Raumfahrzeug) zu verstehen, obwohl zur Veranschaulichung sowohl der erfindungsgemässen als auch der bekannten Lenkungen und Lenkgetriebe stets das am weitesten verbreitete Beispiel in Form eines Personenkraftwagens (PKW) herangezogen wird. Bei einem Landfahrzeug besteht die Lenkungsbetätigungsvorrichtung üblicherweise aus einem Lenkrad und die gelenkten Fahrzeugkomponenten werden durch Fahrzeugräder gebildet. Bei einem Boot können Lenkungsbetätigungsvorrichtung und gelenkte Fahrzeugkomponenten aus Steuerrad bzw. Steuerruder bestehen, bei einem Flugzeug aus Steuerkhüppel bzw. Seiten- und/oder Querleitwerk.

Bei der Anwendung in einer Lenkung für einen Personenkraftwagen (PKW) ist das Lenkgetriebeantriebsglied - üblicherweise in Form einer Lenkgetriebeeingangswelle - mit einem Lenkrad gekoppelt. Das Lenkgetriebeabtriebsglied ist über ein Lenkgestänge mit den gelenkten Fahrzeugrädern, meistens den Vorderrädern, gekoppelt. Das Lenkgestänge umfasst üblicherweise Spurstangen, Lenkschubstangen, Lenkhebel und/oder weitere Elemente. Im Falle einer Zahnstangenlenkung umfasst das Lenkgetriebe einen Ritzel-Zahnstangen-Mechanismus, wobei die das Lenkgetriebeabtriebsglied bildende Zahnstange mit dem Lenkgestänge verbunden ist. Im Falle einer Schneckenrollenlenkung und/oder einer Kugelmutter-Hydrolenkung wird das Lenkgetriebeabtriebsglied durch eine sogenannte Lenkrollenwelle gebildet, an welcher ein Lenkstockhebel befestigt ist, der das Lenkgestänge betätigt.

Bei einem Landfahrzeug mit Lenkrad und gelenkten Rädern werde die Winkelstellung des Lenkrades mit $\alpha$ und diejenige der gelenkten Räder mit $\beta$ bezeichnet. Dann wird durch eine Fahrzeuglenkung insgesamt eine Drehbewegung des Lenkrades um einen Drehwinkel $d\alpha$ in eine Drehbewegung der gelenkten Räder um einen Lenkwinkel $d\beta$ umgesetzt. Bei den meisten gebräuchlichen Lenkungen ist das Übersetzungsverhältnis zwischen der Drehbewegung des Lenkrades und derjenigen der gelenkten Räder über den gesamten Lenkungsbereich von einem Anschlag der Lenkung zum anderen Anschlag im wesentlichen konstant, d.h. es besteht eine lineare Beziehung zwischen dem Drehwinkel $d\alpha$ des Lenkrades und dem Lenkwinkel $d\beta$ der gelenkten Räder.

Im Hinblick auf die Bedienung des Fahrzeuges ist jedoch an sich ein variables Übersetzungsverhältnis zwischen der Drehbewegung des Lenkrades und der Drehbewegung der gelenkten Räder erwünscht. Dabei sind die Anforderungen an die Charakteristik dieses Übersetzungsverhältnisses je nach Fahrzeugtyp und/oder Fahrsituation z.T. sehr unterschiedlich. So ist z.B. für eine sichere Kontrolle des Fahrzeuges in einem Hochgeschwindigkeitsbereich, wo die Lenkung meistens in einem engen Bereich um die Geradeausstellung herum betrieben wird, ein grosses Übersetzungsverhältnis $d\alpha/d\beta$ (Verhältnis zwischen Drehwinkel $d\alpha$ des Lenkrades und Lenkwinkel $d\beta$ der gelenkten Räder) wünschenswert, damit nicht kleine Lenkradbewegungen bereits zu einem abrupten Richtungswechsel führen. Beim Manövrieren des Fahrzeuges mit kleiner Geschwindigkeit, insbesondere zum Parkieren, ist jedoch ein kleines Übersetzungsverhältnis $d\alpha/d\beta$ wünschenswert, damit die gelenkten Räder rasch von einem Lenkanschlag bis zum anderen Lenkanschlag gedreht werden können.

Wenn das Übersetzungsverhältnis $d\alpha/d\beta$ (Verhältnis zwischen Drehwinkel $d\alpha$ des Lenkrades und Lenkwinkel $d\beta$ der gelenkten Räder) von einer neutralen Lenkungstellung für die Geradeausfahrt bei einer Lenkraddrehung nach rechts oder links bis zum Anschlag abnimmt, spricht man von einer progressiven Lenkung. Bei einer progressiven Lenkung (d.h. einer Lenkung mit einer progressiven Charakteristik des Übersetzungsverhältnisses) bewirkt somit eine Lenkraddrehung um ein bestimmtes Winkelinkrement $d\alpha$ bei ausgelenkten Rädern eine grössere Drehung $d\beta$ der gelenkten Räder als bei gerade gestellten Rädern. Eine progressive Lenkung erweist sich insbesondere für Rennwagen als vorteilhaft, um einerseits ein präzises Lenken bei Geradeausfahrten mit hohen Geschwindigkeiten zu ermöglichen und andrerseits im Falle eines Schleuderns des Wagens mit raschen Lenkwinkelverstellungen der gelenkten Rädern reagieren zu können, um den Wagen aus dem Schleudern wieder aufzufangen.

Umgekehrt spricht man von einer degressiven Lenkung (d.h. einer Lenkung mit einer degressiven Charakteristik des Übersetzungsverhältnisses), wenn das Übersetzungsverhältnis $d\alpha/d\beta$ (Verhältnis zwischen Drehwinkel $d\alpha$ des Lenkrades und Lenkwinkel $d\beta$ der gelenkten Räder) von einer neutralen Lenkungstellung für die Geradeausfahrt bei einer Lenkraddrehung nach rechts oder links bis zum Anschlag zunimmt. Im Falle einer degressiven Lenkung bewirkt eine Lenkraddrehung um ein bestimmtes Winkelinkrement $d\alpha$ bei ausgelenkten Rädern eine kleinere Drehung $d\beta$ der gelenkten Räder als bei gerade gestellten Rädern. Eine degressive Lenkung kann z.B. verwendet werden, wenn ein Verzicht auf eine Servo- oder Hilfskraftunterstützung der Lenkung gewünscht ist und trotzdem die Lenkung von schweren Fahrzeugen bei kleinen Geschwindigkeiten ermöglicht werden soll. In diesem Falle erleichtert eine degressive Lenkung das Manövrieren z.B. beim Einparken bei kleinen Geschwindigkeiten, indem sie bei stark ausgelenkten Rädern leichtgängiger ist als im Geradeausfahrbereich.

Fahrzeuglenkungen mit variablem Übersetzungsverhältnis werden u.a. auch von der Firma "ZF Friedrichshafen AG" aus Deutschland in Form von Zahnstangenlenkungen mit degressiver oder progressiver Charakteristik angeboten. Die Degressivität oder die Progressivität dieser Lenkungen beruht auf einer Zahnstange, deren Verzahnung mit unterschiedlichem Modul und Eingriffswinkel gefertigt ist. Der Unterschied zwischen der grössten und der kleinsten Übersetzung der Zahnstange beträgt maximal ungefähr 30%.

Aus DE 195 19 588 A1 (Honda) ist ein Lenkgetriebe mit einer progressiven Charakteristik bekannt. Die Variabilität des Übersetzungsverhältnisses beruht bei diesem Lenkgetriebe darauf, dass die Ausgangswelle des Lenkgetriebes bezüglich dessen Eingangswelle zwar parallel verlaufend, aber versetzt (d.h. exzentrisch) angeordnet ist. Zur Kupplung der Eingangswelle mit der Ausgangswelle ist ein Zwischenelement zwischen den beiden Wellen angeordnet, das im wesentlichen die Funktion einer Schubkurbel (Schubgelenk kombiniert mit Drehgelenk) hat und das Drehmoment von der Eingangswelle bzw. einer mit der Eingangswelle drehfest verbundenen Verlängerung auf die Ausgangswelle überträgt.

Des weiteren sind Lenkgetriebe mit variablem Übersetzungsverhältnis bekannt, bei denen die Variabilität des Übersetzungsverhältnisses mittels der Verwendung von elliptischen Zahnrädern verwirklicht wird.

Sämtliche der bisher bekannten Lenkgetriebe und/oder Lenkungen mit variablem Übersetzungsverhältnis weisen jedoch im Vergleich zu üblichen Lenkgetrieben mit im wesentlichen konstantem Übersetzungsverhältnis systemspezifische Nachteile auf, die einer weitverbreiteten Verwendung der ersteren bisher hindernd im Wege standen. So sind z.B. sowohl für die Herstellung von elliptischen Zahnrädern als auch die Herstellung von Zahnstangen mit variablem Modul und Eingriffswinkel spezielle und teure Werkzeuganordnungen nötig, um die erforderliche Genauigkeit bei der Fertigung zu erreichen. Zudem treten bei sämtlichen bekannten Lenkgetrieben mit variablem Übersetzungsverhältnis Probleme auf im Hinblick auf die erreichbare mechanische Steifigkeit der kraftübertragenden Elemente und im Hinblick auf die Einstellbarkeit des Spiels der Lenkung.

## Darstellung der Erfindung

Aufgabe der vorliegenden Erfindung ist es, eine Lenkung mit variablem Übersetzungsverhältnis bereitzustellen, die über den gesamten Lenkbereich im wesentlich spielfrei einstellbar ist und eine einfache Konstruktion aufweist.

Die Lösung der Aufgabe ist Gegenstand der unabhängigen Patentansprüche 1 und 4.

Gemäss der Erfindung hat eine Fahrzeuglenkung mit variablem Übersetzungsverhältnis ein Lenkgetriebe, das ein um eine erste Drehachse drehbares Antriebsglied aufweist, welches über ein Zwischenglied mit einem um eine zweite Drehachse drehbaren Abtriebsglied gekuppelt ist, wobei das Antriebsglied um eine dritte Drehachse schwenkbar am Zwischenglied und dieses um eine vierte Drehachse schwenkbar am Abtriebsglied angelenkt ist. Zur Erzeugung der Variabilität des Übersetzungsverhältnisses ist das Antriebsglied bezüglich des Abtriebsgliedes derart angeordnet, dass die erste Drehachse bezüglich der zweiten Drehachse einen Winkel einschliesst.

Ein erfindungsgemässes Lenkgetriebe für eine Fahrzeuglenkung mit variablem Übersetzungsverhältnis hat ein um eine erste Drehachse drehbares Antriebsglied, das über ein Zwischenglied mit einem um eine zweite Drehachse drehbaren Abtriebsglied gekuppelt ist, wobei das Antriebsglied um eine dritte Drehachse schwenkbar am Zwischenglied und dieses um eine vierte Drehachse schwenkbar am Abtriebsglied angelenkt ist.

Das erfindungsgemässe Lenkgetriebe besteht im wesentlichen bloss aus den drei Teilen Antriebsglied, Zwischenglied und Abtriebsglied sowie aus ersten Gelenkmitteln zur schwenkbaren Anlenkung des Antriebsgliedes am Zwischenglied und aus zweiten Gelenkmitteln zur schwenkbaren Anlenkung des Zwischengliedes am Abtriebsglied. Das erfindungsgemässe Lenkgetriebe weist somit eine äusserst einfache Konstruktion auf. Sämtliche für das erfindungsgemässe Lenkgetriebe erforderlichen Gelenkmittel können einstellbare Lager, z.B. Kegelrollenlager, umfassen, damit das erfindungsgemässe Lenkgetriebe über den gesamten Lenkbereich im wesentlichen spielfrei einstellbar ist.

Das Übersetzungsverhältnis zwischen der Drehbewegung des Antriebsgliedes und der zugeordneten Drehbewegung des Abtriebsgliedes variiert nach Art eines Kardanantriebes in Funktion der Winkelstellung des Antriebsgliedes. Je nach Winkellage, unter welcher das Lenkgetriebe in bezug auf die neutrale Geradeausstellung der Lenkung in die Lenkung eingebaut ist, wird mittels des erfindungsgemässen Lenkgetriebes eine progressive oder eine degressive Lenkung erreicht.

Bei einer bevorzugten Ausführungsform der erfindungsgemässen Lenkung sind das Antriebsglied und das Abtriebsglied bezüglich einander derart angeordnet, dass der zwischen der ersten Drehachse und der zweiten Drehachse eingeschlossene Winkel in einem Bereich zwischen 35 Grad und 89 Grad liegt. Vorzugsweise ist die Anordnung derart, dass dieser Winkel zwischen 60 Grad und 89 Grad liegt. Insbesondere wird eine Anordnung bevorzugt, bei der dieser Winkel ungefähr 70 Grad beträgt.

Eine weitere bevorzugte Ausführungsform der erfindungsgemässen Lenkung umfasst zur Betätigung der Lenkung ein Lenkrad, welches zur Begrenzung der Drehbewegung des Lenkrades mit Drehwinkel-Begrenzungsmitteln versehen ist. Die Drehwinkel-Begrenzungsmittel können z.B. einen fest am Lenkrad angebrachten Nocken umfassen, welcher mit einem an der Lenkradhalterung angebrachten Nockenanschlag zur Begrenzung der Drehbewegung nach rechts und nach links zusammenwirkt. Diese Ausführungsform der Erfindung erweist sich insbesondere bei der Anwendung in einer Servolenkung (Hilfskraftlenkung) als vorteilhaft. Bei herkömmlichen Servolenkungen wird einerseits der maximale Lenkwinkel durch den Anschlag der gelenkten Räder begrenzt, andrerseits wird typischerweise ein Hydraulikdrehschieber zur Steuerung des Servoantriebes durch die lenkradseitig am Lenkgetriebe angeordnete Getriebeeingangswelle gesteuert. Dadurch besteht die Gefahr einer Überbelastung der Hydraulikeinrichtung der Servolenkung, wenn z.B. beim Parkieren das Lenkrad weiter gedreht wird, wenn die Räder sich bereits in ihrer Position am Anschlag befinden. Durch die Möglichkeit der Begrenzung des Drehwinkels am Lenkrad kann bei der erfindungsgemässen Lenkung diese Gefahr einer Überbelastung der Servovorrichtung verhindert werden. Wie bereits die herkömmlichen PKW-Servolenkungen ist auch eine erfindungsgemässe PKW-Servolenkung bei einem Servoausfall immer noch von Hand betätigbar.

Eine weitere bevorzugte Ausführungsform des erfindungsgemässen Lenkgetriebes zeichnet sich dadurch aus, dass das Zwischenglied bezüglich des Abtriebsgliedes derart angeordnet ist, dass die vierte Drehachse bezüglich der zweiten Drehachse einen Winkel im Bereich von 45 Grad bis 85 Grad, vorzugsweise einen solchen zwischen 70 Grad und 80 Grad, einschliesst. Insbesondere wird eine Anordnung derart bevorzugt, dass dieser Winkel ungefähr 75 Grad beträgt. Bei dieser Ausführungsform des erfindungsgemässen Lenkgetriebes gibt es einen Bereich von Winkelstellungen (Phasen) des Getriebes, bei der eine Drehbewegung des Antriebsgliedes um einen Halbkreiswinkel (mit der Phase als Zentrum) mit einer Drehbewegung des Abtriebsgliedes um einen Winkel gekoppelt ist, der kleiner ist als ein Halbkreiswinkel. Dieser Bereich wird als Langphasenbereich des Antriebsgliedes bzw. Kurzphasenbereich des Abtriebsgliedes definiert. Die Drehbewegung des Antriebsgliedes um den anderen Halbkreiswinkel ist dann mit einer Drehbewegung des Abtriebsgliedes um einen Winkel gekoppelt, der entsprechend grösser ist als ein Halbkreiswinkel, da natürlich eine Drehbewegung des Antriebsgliedes um einen Vollkreis nach wie vor mit einer Drehbewegung des Abtriebsgliedes um einen Vollkreis gekoppelt ist. Bei der Anwendung eines Lenkgetriebes gemäss dieser Ausführungsform in einer PKW-Lenkung wird das Lenkgetriebe vorteilhafterweise derart angeordnet, dass in Geradeausstellung der gelenkten Räder das Antriebsglied in der Mitte seines Langphasenbereichs und das Abtriebsglied in der Mitte seines Kurzphasenbereichs liegt. Dadurch wird erreicht, dass bei einem vorgegebenen Lenkwinkelbereich, innerhalb dessen Grenzen die Winkelstellung $\beta$ der gelenkten Räder variiert werden kann, der nutzbare Drehwinkelbereich, innerhalb dessen Grenzen die Winkelstellung $\alpha$ des Lenkrades variiert werden kann, maximal wird.

Bei einer weiteren Variante des erfindungsgemässen Lenkgetriebes ist das Antriebsglied bezüglich des Zwischengliedes derart angeordnet, dass die erste Drehachse bezüglich der dritten Drehachse einen Winkel im Bereich von 45 Grad bis 90 Grad einschliesst. Vorzugsweise beträgt dieser Winkel ungefähr 90 Grad.

Das Antriebsglied umfasst vorzugsweise eine gabelförmige Partie (mit ähnlicher Form wie eine Fahrradgabel) mit zwei Gabelholmen (Gabelscheiden), wobei die beiden Gabelholme je mit ersten Gelenkmitteln zur schwenkbaren Anlenkung der Gabelholme am Zwischenglied versehen sind. Die ersten Gelenkmittel können Achszapfen umfassen, die in den Gabelholmen einschraubbar sind und mit entsprechend am Zwischenstück angeordneten Lagerbuchsen und Kegelrollenlagern zusammenwirken. Mit den schraubbaren Achszapfen kann das Spiel der Kegelrollenlager eingestellt werden. Weiter können die Gabelholmen in Holmenlängsrichtung geschlitzt sein und mit einer quer durch den Schlitz hindurch angeordneten Bohrung versehen sein, in welche eine Fixierschraube einschraubbar ist, mit welcher die Achszapfen fixiert werden können.

Es können jedoch auch andere geeignete Drehgelenke verwendet werden, um das Antriebsglied um die dritte Drehachse schwenkbar am Zwischenglied anzulenken. So können z.B die Buchsen am Antriebsglied und die Zapfen am Zwischenstück angeordnet sein.

Bei einer bevorzugten Ausführungsform des erfindungsgemässen Lenkgetriebes ist zur schwenkbaren Anlenkung des Zwischengliedes am Abtriebsglied ein Achszapfen einseitig fest an einem der beiden Teile eines Teilepaares, bestehend aus dem Zwischenglied und dem Abtriebsglied, angeordnet und das andere der beiden Teile dieses Teilepaares mittels Lagermitteln drehbar auf dem Achszapfen gelagert. Mit anderen Worten ist entweder der Achszapfen einseitig fest am Abtriebsglied angeordnet und das Zwischenglied auf dem Achszapfen gelagert, oder der Achszapfen ist einseitig fest am Zwischenglied angeordnet und das Abtriebsglied auf dem Achszapfen gelagert. Der Achszapfen bildet also in Verbindung mit den Lagermitteln zweite Gelenkmittel zur um die vierte Drehachse schwenkbaren Verbindung zwischen dem Zwischenglied und dem Abtriebsglied. In diesem Fall wird die vierte Drehachse durch das Zentrum des Achszapfens definiert. Ein Vorteil der bloss einseitigen Befestigung des Achszapfens ist die grosse Bewegungsfreiheit des Lenkgetriebes: so erfordert zum Beispiel das dem fest am Abtriebsglied angeordneten Ende gegenüberliegende freie (fliegende) Ende des Achszapfens keine am Zwischenglied angebrachten Träger- und/oder Stützmittel, welche die Bewegung des Lenkgetriebes behindern könnten, dies im Gegensatz z. B. zu einer Konstruktion nach Art eines konventionellen Kreuzgelenkes.

Vorzugsweise weist der Achszapfen einen kegelförmigen Abschnitt auf, umfassen die Lagermittel ein oder mehrere Kegelrollenlager und ist das auf dem Achszapfen gelagerte Teil mittels axial verschieblichen Festhaltemitteln in seiner axialen Position arretierbar, wobei mittels axialer Verschiebung der Festhaltemittel das Spiel der Lagermittel (und somit der zweiten Gelenkmittel) einstellbar ist. Die Festhaltemittel können eine mit einem Innengewinde versehene Stirnmutter umfassen, welche auf dem mit einem Aussengewinde versehenen freien Ende des Achszapfens aufschraubbar ist, um das auf dem Achszapfen gelagerte Teil in seiner axialen Position zu fixieren.

Vorzugsweise weist das Abtriebsglied eine erste Schenkelpartie, eine zweite Schenkelpartie sowie eine die beiden Schenkelpartien verbindende Stegpartie auf, wobei der Achszapfen einseitig fest an der Stegpartie angeordnet ist und die beiden Schenkelpartien je mit dritten Gelenkmitteln zur um die zweite Drehachse drehbaren Lagerung des Abtriebsgliedes versehen sind. Diese dritten Gelenkmittel können fest am Abtriebsglied angebrachte Achszapfen umfassen, um mit Lagerbuchsen zusammenzuwirken, die z.B. an einem Trägergestänge eines Fahrzeuges angebracht sind. Vorzugsweise umfassen auch die dritten Gelenkmittel spielfrei einstellbare Kegelrollenlager.

Es können jedoch auch andere geeignete Drehgelenke verwendet werden, um das Zwischenglied um die vierte Drehachse schwenkbar am Abtriebsglied anzulenken. So kann beispielsweise das Abtriebsglied bloss einseitig an einem Trägergestänge eines Fahrzeuges angelenkt sein.

Es sind auch andere Formen für das Abtriebsglied möglich als die oben beschriebene Sichelform (d.h. zwei Schenkelpartien, die durch Stegpartie verbunden sind). So kann das Abtriebsglied z.B. auch winkelförmig ausgebildet sein, mit einer ersten Schenkelpartie und einer unter einem Winkel zu dieser an ihr angeordneten zweiten Schenkelpartie. Bei einem winkelförmigen Abtriebsglied kann ein Achszapfen zur schwenkbaren Anlenkung des Zwischengliedes am Abtriebsglied einseitig fest an der ersten Schenkelpartie angeordnet sein und die zweite Schenkelpartie mit Gelenkmitteln zur um die zweite Drehachse drehbaren Lagerung des Abtriebsgliedes versehen sein.

Eine weitere Variante der erfindungsgemässen Lenkung zeichnet sich dadurch aus, dass der zwischen der ersten Drehachse und der zweiten Drehachse eingestellte Winkel veränderlich einstellbar ist, indem die Anordnung des Antriebsgliedes bezüglich der Anordnung des Abtriebsgliedes variiert werden kann. Dadurch kann die Funktion verändert werden, nach welcher das Übersetzungsverhältnis in Abhängigkeit des Drehwinkels des Antriebsgliedes variiert. Vorzugsweise ist der zwischen der ersten Drehachse und der zweiten Drehachse eingestellte Winkel stufenlos einstellbar. Dadurch wird eine Einstellbarkeit der Progressivität der Lenkung erreicht. Bei einer weiteren bevorzugten Ausführungsform der Erfindung ist dieser Winkel in Funktion der Fahrgeschwindigkeit einstellbar, um eine geschwindigkeitsabhängige Progressivität der Lenkung zu erreichen.

Bei einer weiteren Variante der Erfindung schliesst die vierte Drehachse bezüglich der zweiten Drehachse einen von 90 Grad abweichenden Winkel ein, und der zwischen der ersten Drehachse und der zweiten Drehachse eingestellte Winkel ist veränderlich einstellbar. Bei dieser Variante der Erfindung kann der Winkel zwischen der ersten Drehachse und der zweiten Drehachse auf einen ersten Wert eingestellt werden, bei dem eine Drehbewegung des Antriebsgliedes stets mit einer gleichsinnigen Drehbewegung des Abtriebsgliedes gekoppelt ist, und auf einen zweiten Wert, bei dem in einem bestimmten Bereich von Drehwinkelstellungen des Antriebsgliedes eine Drehbewegung des Antriebsgliedes mit einer gegensinnigen Drehbewegung des Abtriebsgliedes gekoppelt ist. Diese Variante der Erfindung kann z.B. verwendet werden, um das Rückwärtsfahren eines Fahrzeuges zu erleichtern, indem beim Rückwärtsfahren eine gegensinnige Kopplung zwischen einer Drehbewegung am Lenkrad und der Lenkbewegung an den gelenkten Rädern eingestellt wird. Weiter ist eine Anwendung dieser Ausführungsform der Erfindung bei einer Allradlenkung denkbar, um z. B. bei kleinen Geschwindigkeiten eine gegensinnige Auslenkung von Vorder- und Hinterrädern und bei grossen Geschwindigkeiten eine gleichsinnige Auslenkung einstellen zu können.

Die nachfolgende detaillierte Beschreibung eines Ausführungsbeispiels der vorliegenden Erfindung dient in Verbindung mit den beiliegenden Zeichnungen nur als Beispiel für ein besseres Verständnis der Erfindung und ist nicht als Einschränkung des Schutzbereichs der vorliegenden Erfindung, wie sie in den Patentansprüchen definiert wird, aufzufassen. Für den Fachmann sind aus der nachfolgenden Beschreibung in Verbindung mit den beiliegenden Zeichnungen und der Gesamtheit der Patentansprüche weitere vorteilhafte Ausführungsformen und Merkmalskombinationen ohne weiteres erkennbar, die jedoch immer noch innerhalb des Bereichs der vorliegenden Erfindung liegen.

**Kurze Beschreibung der Zeichnungen**

Die Zeichnungen stellen bevorzugte Ausführungsformen der vorliegenden Erfindung dar. Es zeigt:

Fig. 1    ein Lenkgetriebe einer erfindungsgemässen Lenkung in einer Seitenansicht;

Fig. 2    einen Querschnitt entlang der Linie B - B durch das Lenkgetriebe in Fig. 1;

Fig. 3    eine Explosionszeichnung des Lenkgetriebes in Fig. 1;

Fig. 4    eine schematische Darstellung einer erfindungsgemässen Servo-Lenkung;

Fig. 5    eine teilweise geschnittene Ansicht entlang der Linie A - A durch die Lenkung in Fig. 5;

Fig. 6    eine Diagrammdarstellung der Kinematik und des Übersetzungsverhältnisses des Lenkgetriebes in Fig. 1.

Grundsätzlich sind in den Figuren gleiche Teile mit gleichen Bezugszeichen versehen.

**Wege zur Ausführung der Erfindung**

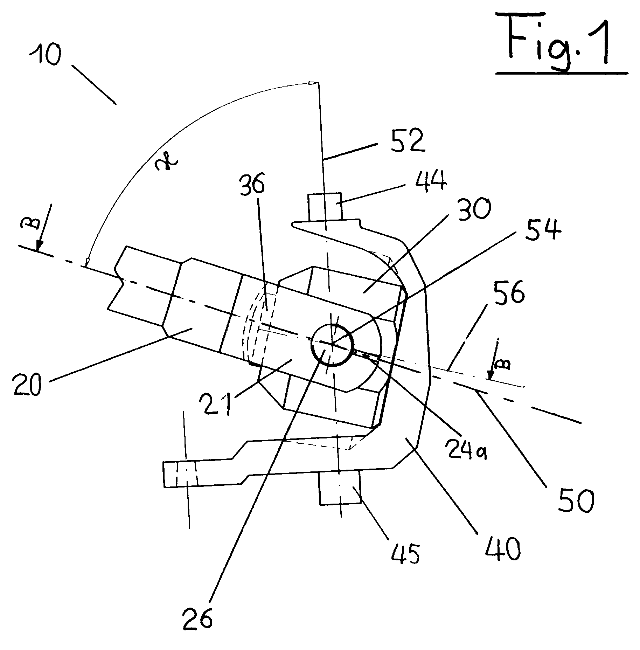

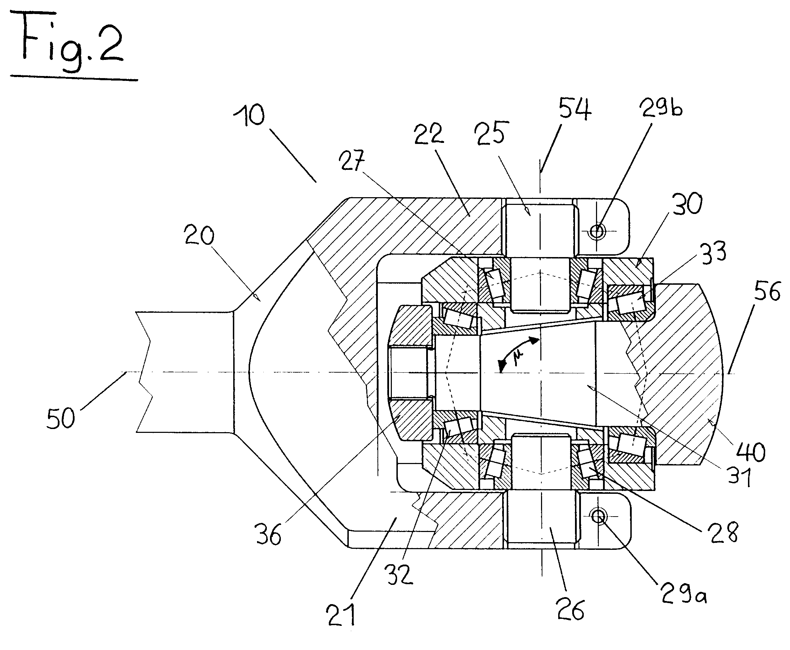

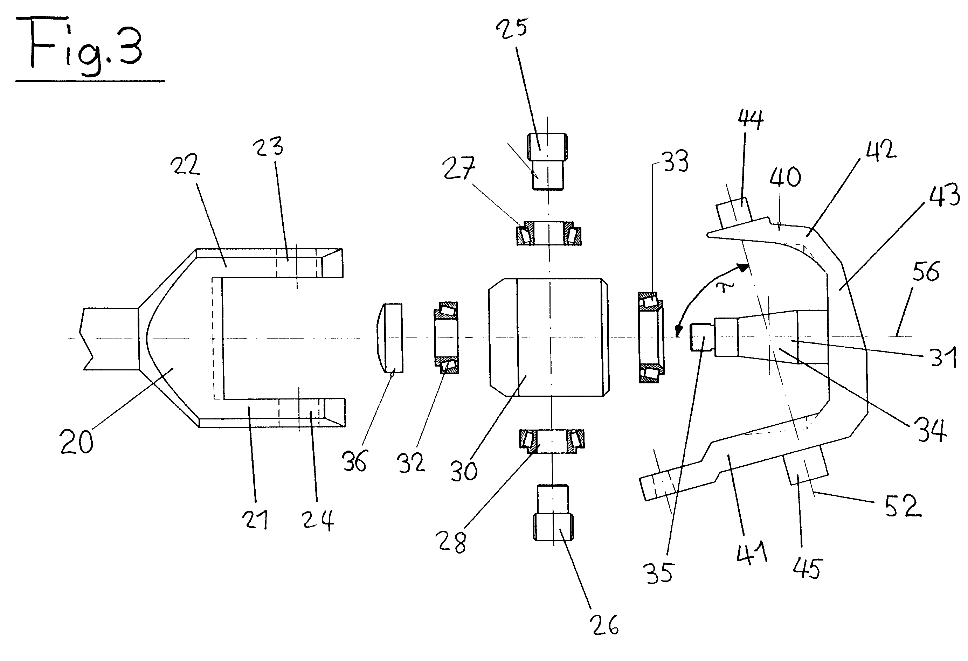

In Fig. 1 ist ein Ausführungsbeispiel eine Lenkgetriebes 10 einer Lenkung gemäss der Erfindung in einer Ansicht von der Seite dargestellt. In Fig. 2 ist das Lenkgetriebe 10 in einem Querschnitt entlang der geknickten Linie B - B (d.h. durch die erste Drehachse 50 und die vierte Drehachse 56 hindurch) dargestellt, und Fig. 3 zeigt eine Explosionszeichnung des Lenkgetriebes 10.

Das in Fig. 1 dargestellte Lenkgetriebe hat ein um eine erste Drehachse 50 drehbares Antriebsglied 20, welches über ein Zwischenglied 30 mit einem um eine zweite Drehachse 52 drehbaren Abtriebsglied 40 gekuppelt ist. Das Antriebsglied 20 ist um eine dritte Drehachse 54 schwenkbar am Zwischenglied 30 angelenkt. Das Zwischenglied 30 ist seinerseits um eine vierte Drehachse 56 schwenkbar am Abtriebsglied 40 angelenkt.

Das Antriebsglied 20 weist eine gabelförmige Partie auf, die ähnlich einer Fahrradgabel zwei Gabelholmen (Gabelscheiden) 21, 22 hat. Die beiden Gabelholme 21, 22 weisen je eine Bohrung 23, 24 auf, die mit einem Innengewinde versehen ist. In diese Bohrungen 23, 24 ist je ein mit einem Aussengewinde versehener Achszapfen 25, 26 einschraubbar. Die Achszapfen 25, 26 weisen je eine äussere, dickere Partie auf, die mit einem Aussengewinde versehen ist, um mit dem Innengewinde der Bohrungen 23, 24 zusammenzuwirken, und eine innere, schlankere Partie, welche an der Innenseite des Antriebsgliedes 20 über die Innenseite der Gabelholme 21, 22 vorstehen. Die inneren Partien der Achszapfen 25, 26 passen in erste Kegelrollenlager 27, 28, die in entsprechenden Bohrungen im Zwischenglied 30 angeordnet sind. Durch die Gelenkanordnung 23, 24, 25, 26, 27, 28 ist das Antriebsglied 20 über die beiden Gabelholme 21, 22 um die dritte Drehachse 54 schwenkbar am Zwischenglied 30 angelenkt.

Das Spiel der Kegelrollenlager 27, 28 und somit des um die Drehachse 54 schwenkbaren Drehgelenks kann mittels Schraubens der Achszapfen 25, 26 eingestellt werden. Zur Fixierung der Achszapfen 25, 26 in einer eingestellten Position sind die Gabelholme 21, 22 mit von den Bohrungen 23, 24 bis zu den Holmenspitzen verlaufenden Längsschlitzen 23a, 24a und je einer quer durch den Schlitz hindurch angeordneten Bohrung 29a, 29b versehen, in welche je eine Fixierschraube einschraubbar ist.

Das Abtriebsglied 40 weist eine erste Schenkelpartie 41, eine zweite Schenkelpartie 42 sowie eine die beiden Schenkelpartien 41, 42 verbindende Stegpartie 43 auf. An den beiden Schenkelpartien 41, 42 ist je ein Achszapfen 44, 45 angeordnet. Diese Achszapfen 44, 45 passen in dritte Kegelrollenlager (nicht dargestellt), um das Abtriebsglied 40 um die zweite Drehachse 52 drehbar zu lagern. Diese dritten Kegelrollenlager können mit Lagerbuchsen zusammenzuwirken, die z.B. an einem Trägergestänge eines Fahrzeuges angebracht sind.

Ein weiterer Achszapfen 31 ist einseitig fest an der Stegpartie 43 des Abtriebsgliedes 40 angeordnet. Mittels Kegelrollenlagern 32, 33 ist das Zwischenglied 30 um die vierte Drehachse 56 drehbar auf dem Achszapfen 31 gelagert. Die bloss einseitige Befestigung des Achszapfens 31 am Abtriebsglied 40 weist den Vorteil auf, dass sie eine grosse Bewegungsfreiheit des Lenkgetriebes 10 gewährleistet, indem keine Träger- oder Stützmittel am freien (fliegenden) Ende des Achszapfens 31 die Bewegung des Lenkgetriebes 10 behindern.

Der Achszapfen 31 weist einen kegelförmigen Abschnitt 34 auf. Zur axialen Verschiebung und Fixierung des mittels der Kegelrollenlager 23, 33 auf dem Achszapfen 31 gelagerten Zwischengliedes 30 weist der Achszapfen 31 an seinem fliegenden Ende 35 ein Aussengewinde auf. Eine mit einer Bohrung mit Innengewinde versehene Stirnmutter 36 ist auf das fliegende Ende 35 des Achszapfens aufschraubbar, um das auf dem Achszapfen gelagerte Zwischenglied 30 in seiner axialen Position zu fixieren. Mit der Stirnmutter 36 kann das Spiel der Kegelrollenlager 23, 33 und somit des um die vierte Drehachse 56 schwenkbaren Drehgelenks eingestellt werden.

Wie in Fig. 1 zu erkennen ist, ist das Antriebsglied 20 bezüglich des Abtriebsgliedes 40 derart angeordnet, dass die erste Drehachse 50 bezüglich der zweiten Drehachse 52 einen von null Grad abweichenden Winkel $\kappa$ von ungefähr 70 Grad einschliesst. Dadurch wird ein in Funktion der Winkelstellung (Drehwinkel des Antriebsgliedes 20 um die erste Drehachse 50) variierendes Übersetzungsverhältnis d/d$\psi$ (Verhältnis zwischen Drehwinkel d des Antriebsgliedes 20 und Drehwinkel d$\psi$ des Abtriebsgliedes 40) erzeugt, wobei $\psi$ die Winkelstellung des Abtriebsgliedes 40 (Drehwinkel des Abtriebsgliedes 40 um die zweite Drehachse 52) bezeichnet.

Wenn die einzelnen Bestandteile des Lenkgetriebes bezüglich einander derart angeordnet wären, dass sowohl der zwischen der ersten und der dritten Drehachse eingeschlossene Winkel als auch der zwischen der zweiten und der vierten Drehachse eingeschlossene Winkel im wesentlichen 90 Grad messen würden, so würde das Übersetzungsverhältnis zwischen der Drehbewegung des Antriebsgliedes und der zugeordneten Drehbewegung des Abtriebsgliedes nach Art eines üblichen Kardanantriebes (basierend auf einem gebräuchlichen Kreuzgelenk) variieren.

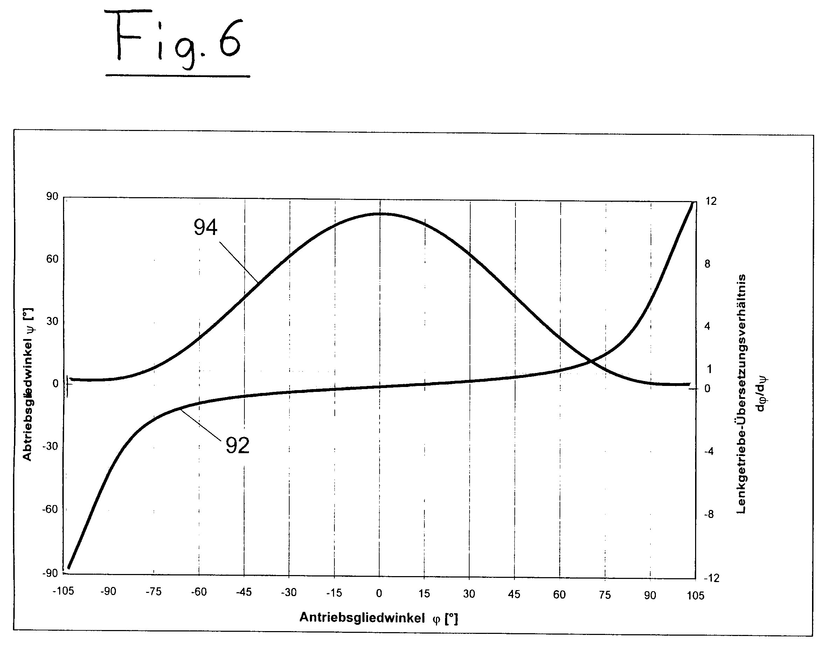

Bei der in den Figuren dargestellten Ausführungsform der Erfindung ist jedoch zwischen der zweiten Drehachse 52 und der vierten Drehachse 56 ein Winkel $\lambda$ von ungefähr 75 Grad eingeschlossen, und der Winkel $\mu$ zwischen der ersten Drehachse 50 sowie der dritten Drehachse 54 beträgt im wesentlichen 90 Grad. Zudem ist das in den Figuren dargestellte Lenkgetriebe 10 derart in einer erfindungsgemässen Lenkung angeordnet, dass der zwischen der ersten Drehachse 50 und der zweiten Drehachse 52 eingeschlossene Winkel $\kappa$ ungefähr 70 Grad beträgt. Die Kinematik 92 (d.h. die Abhängigkeit der Winkelstellung $\psi$ des Abtriebsgliedes 40 von der Winkelstellung des Antriebsgliedes 20) und das Übersetzungsverhältnis d/d$\psi$ 94 (Verhältnis zwischen Drehwinkelinkrement d des Antriebsgliedes und Drehwinkelinkrement d$\psi$ des Abtriebsgliedes) des dargestellten Lenkgetriebes 10 sind als Diagramme 92, 94 in der Figur 6 dargestellt.

Wie aus Fig. 6 zu erkennen ist, nimmt das Übersetzungsverhältnis d/d$\psi$ 94 von der Nullage des Antriebsgliedwinkels (entspricht einer neutralen Lenkungstellung für die Geradeausfahrt) sowohl bei einer Drehung des Antriebsgliedes 20 nach rechts (zunehmender Antriebsgliedwinkel) als auch bei einer Drehung des Antriebsgliedes 20 nach links (abnehmender Antriebsgliedwinkel) ab. Dies bedeutet, dass die Lenkung eine progressive Charakteristik hat. Beim in den Figuren dargestellten Lenkgetriebe 10 nimmt dabei das Übersetzungsverhältnis d/d$\psi$ 94 von einem Maximalwert von 11 bei der Nullage von auf einen Minimalwert von 0.37 beim Anschlag des Lenkgetriebes 10 ab. Der Anschlag des Lenkgetriebes 10 wird sowohl bei Rechtsals auch bei Linksdrehung des Antriebsgliedes 20 um einen Drehwinkel d von ungefähr 104 Grad aus seiner Nullage erreicht. Das Abtriebsglied 40 wird dabei um einen Drehwinkel d$\psi$ von 90 Grad aus seiner Nullage gedreht. Der grosse nutzbare Drehwinkelbereich von -104 Grad bis +104 Grad ist eine Folge der Anordnung des Zwischengliedes 30 am Abtriebsglied 40 derart, dass der Winkel $\lambda$ zwischen der zweiten Drehachse 52 und der vierten Drehachse 56 von 90 Grad abweicht.

Bei dem in den Figuren dargestellten Ausführungsbeispiel der Erfindung (d.h. $\kappa$ = 70 Grad, $\lambda$ = 75 Grad, $\mu$ = 90 Grad) gelten für die Kinematik (d.h. die Abhängigkeit der Winkelstellung $\psi$ des Abtriebsgliedes 40 von der Winkelstellung des Antriebsgliedes 20) im wesentlichen die folgenden Beziehungen:

$$\sin \psi = \frac{2*\sin\varphi*(A+B)*(C+D)}{\sin^2\varphi*[(A+B)^2-(A+B)^2]+2*C*(C+D)}$$

wobei

$A = \sin\kappa*\cos\lambda$

$B = \cos\kappa*\sin\lambda$

$C = \cos\varphi*\sin\lambda$

$D = \sqrt{C^2-\sin^2\varphi*(A-B)^2}$

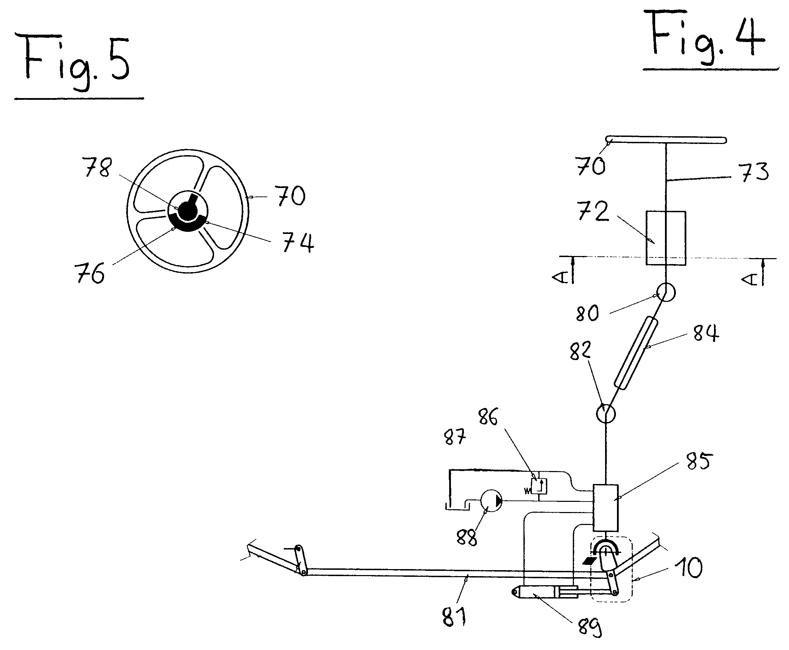

In Fig. 4 ist eine Ausführungsform einer erfindungsgemässen Lenkung schematisch dargestellt, die mit einer Einrichtung zur Servounterstützung der Lenkung versehen ist.

Ein Lenkrad 70 ist drehfest an einer Lenkradwelle 73 angebracht, welche drehbar in einer Lenkradhalterung 72 gelagert ist. Zur Begrenzung der Drehbewegung des Lenkrades ist die Lenkung mit Drehwinkel-Begrenzungsmitteln 74 versehen. Wie in Fig. 5 zu sehen ist, umfassen die Drehwinkel-Begrenzungsmittel 74 einen fest an der Lenkradwelle 73 angebrachten Nocken 78, welcher mit einem an der Lenkradhalterung 72 angebrachten Nockenanschlag 76 zusammenwirkt, um sowohl die Drehbewegung des Lenkrades 70 nach rechts als auch diejenige nach links zu begrenzen.

Die Lenkradwelle 73 ist über Kreuzgelenke 80, 82, einen sogenannten Crash-Absorber 84 und einen Hydraulik-Drehschieber 85 an das Lenkgetriebe 10 gekoppelt, welches über eine Spurstange 81 ein Lenkgestänge betätigt, um die lenkbaren Räder eines Fahrzeuges zu lenken. Über den Hydraulik-Drehschieber 85 wird eine Servoeinrichtung gesteuert, die im wesentlichen ein Druckbegrenzungsventil 86, einen Hydrauliktank 87, eine Hydraulikpumpe 88 und einen Arbeitszylinder 89 umfasst. Der Hydraulik-Drehschieber 85 ist antriebsseitig am Lenkgetriebe 10 angeordnet und der Arbeitszylinder 89 ist abtriebsseitig am Lenkgetriebe 10 angeordnet. Durch diese Anordnung wird in Verbindung mit den Drehwinkel-Begrenzungsmitteln 74 die Gefahr einer Überbelastung der Servoeinrichtung verhindert, die bei gebräuchlichen Servolenkungen insbesondere beim Manövrieren des Fahrzeuges beim Parkieren häufig vorhanden ist.

Zusammenfassend ist festzustellen, dass durch die Erfindung eine Fahrzeuglenkung mit variablem Übersetzungsverhältnis und ein Lenkgetriebe für eine solche Lenkung bereit gestellt werden, wobei das Lenkgetriebe im wesentlichen bloss aus einem Antriebsglied, einem Zwischenglied und einem Abtriebsglied besteht sowie aus Gelenkmitteln zur schwenkbaren Anlenkung des Antriebsgliedes am Zwischenglied und des Zwischengliedes am Abtriebsglied. Das erfindungsgemässe Lenkgetriebe weist somit eine äusserst einfache Konstruktion auf. Bei Verwendung geeigneter Gelenkmittel ist das erfindungsgemässe Lenkgetriebe über den gesamten Lenkbereich im wesentlichen spielfrei einstellbar.

## Patentansprüche

1. Fahrzeuglenkung mit variablem Übersetzungsverhältnis, mit einem Lenkgetriebe (10), das ein um eine erste Drehachse (50) drehbares Antriebsglied (20) aufweist, welches über ein Zwischenglied (30) mit einem um eine zweite Drehachse (52) drehbaren Abtriebsglied (40) gekuppelt ist, wobei das Antriebsglied (20) um eine dritte Drehachse (54) schwenkbar am Zwischenglied (30) und dieses um eine vierte Drehachse (56) schwenkbar am Abtriebsglied (40) angelenkt ist, dadurch gekennzeichnet, dass zur Erzeugung der Variabilität des Übersetzungsverhältnisses das Antriebsglied (20) bezüglich des Abtriebsgliedes (40) derart angeordnet ist, dass die erste Drehachse (50) bezüglich der zweiten Drehachse (52) einen Winkel ($\kappa$) einschliesst.

2. Fahrzeuglenkung nach Anspruch 1, dadurch gekennzeichnet, dass das Antriebsglied (20) bezüglich des Abtriebsgliedes (40) derart angeordnet ist, dass der zwischen der ersten Drehachse (50) und der zweiten Drehachse (52) eingeschlossene Winkel ($\kappa$) in einem Bereich zwischen 35 Grad und 89 Grad liegt.

3. Fahrzeuglenkung nach einem der Ansprüche 1 oder 2, dadurch gekennzeichnet, dass sie zur Betätigung der Lenkung weiter ein Lenkrad (70) umfasst, welches zur Begrenzung der Drehbewegungen des Lenkrades (70) mit Drehwinkel-Begrenzungsmitteln (74, 76, 78) versehen ist.

4. Lenkgetriebe (10) für Fahrzeuglenkung nach einem der Ansprüche 1 bis 3, mit einem um eine erste Drehachse (50) drehbaren Antriebsglied (20), das über ein Zwischenglied (30) mit einem um eine zweite Drehachse (52) drehbaren Abtriebsglied (40) gekuppelt ist, dadurch gekennzeichnet, dass das Antriebsglied (20) um eine dritte Drehachse (54) schwenkbar am Zwischenglied (30) und dieses um eine vierte Drehachse (56) schwenkbar am Abtriebsglied (40) angelenkt ist.

5. Lenkgetriebe (10) nach Anspruch 4, dadurch gekennzeichnet, dass das Zwischenglied (30) bezüglich des Abtriebsgliedes (40) derart angeordnet ist, dass die vierte Drehachse (56) bezüglich der zweiten Drehachse (52) einen Winkel ($\lambda$) im Bereich von 45 Grad bis 85 Grad einschliesst.

6. Lenkgetriebe (10) nach Anspruch 4 oder 5, dadurch gekennzeichnet, dass das Antriebsglied (20) bezüglich des Zwischengliedes (30) derart angeordnet ist, dass die erste Drehachse (50) bezüglich der dritten Drehachse (54) einen Winkel ($\mu$) im Bereich von 45 Grad bis 90 Grad einschliesst.

7. Lenkgetriebe (10) nach einem der Ansprüche 4 bis 6, dadurch gekennzeichnet, dass das Antriebsglied (20) eine gabelförmige Partie mit zwei Gabelholmen (21, 22) umfasst und die beiden Gabelholme (21, 22) je mit ersten Gelenkmitteln (23, 24, 25, 26, 27, 28) zur schwenkbaren Anlenkung der Gabelholme (21, 22) am Zwischenglied (30) versehen sind.

8. Lenkgetriebe (10) nach einem der Ansprüche 4 bis 7, dadurch gekennzeichnet, dass zur schwenkbaren Anlenkung des Zwischengliedes (30) am Abtriebsglied (40) ein Achszapfen (31) einseitig fest an einem der beiden Teile eines Teilepaares bestehend aus dem Zwischenglied (30) und dem Abtriebsglied (40) angeordnet ist und das andere der beiden Teile dieses Teilepaares mittels Lagermitteln (32, 33) drehbar auf dem Achszapfen (31) gelagert ist.

9. Lenkgetriebe (10) nach Anspruch 8, dadurch gekennzeichnet, dass der Achszapfen (31) einen kegelförmigen Abschnitt (34) aufweist, die Lagermittel (32, 33) ein oder mehrere Kegelrollenlager (32, 33) umfassen und das auf dem Achszapfen (31) gelagerte Teil (30) mittels axial verschieblichen Festhaltemitteln (36) in seiner axialen Position arretierbar ist, wobei mittels axialer Verschiebung der Festhaltemittel (36) das Spiel der Lagermittel (32, 33) einstellbar ist.

10. Lenkgetriebe (10) nach Anspruch 8 oder 9, dadurch gekennzeichnet, dass das Abtriebsglied (40) eine erste Schenkelpartie (41), eine zweite Schenkelpartie (42) sowie eine die beiden Schenkelpartien (41, 42) verbindende Stegpartie (43) aufweist, wobei der Achszapfen (31) einseitig fest an der Stegpartie (43) angeordnet ist und die beiden Schenkelpartien (41, 42) je mit dritten Gelenkmitteln (44, 45) zur um die zweite Drehachse (52) drehbaren Lagerung des Abtriebsgliedes (40) versehen sind.

Fig.1

EP 0 915 002 A1

Fig.2

EP 0 915 002 A1

# Fig.3

EP 0 915 002 A1

Fig.5

Fig.4

Fig.6

# EP 0 915 002 A1

**Europäisches Patentamt**

## EUROPÄISCHER RECHERCHENBERICHT

Nummer der Anmeldung

EP 97 81 0839

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP 0 737 612 A (CATERPILLAR INC) 16.Oktober 1996 <br> * Spalte 5, Zeile 39 - Spalte 7, Zeile 20 * <br> * Spalte 8, Zeile 27 - Spalte 9, Zeile 54 * <br> * Abbildungen 2-2-7,10 * | 1,4,7 | B62D1/20 <br> F16D3/26 <br> B62D3/02 |
| A | | 3 | |
| X | EP 0 008 305 A (BAYERISCHE MOTOREN WERKE AG) 5.März 1980 <br> * Spalte 4, Zeile 21 - Spalte 7, Zeile 4; Abbildungen * | 1,4 | |
| A | | 2,3 | |

**RECHERCHIERTE SACHGEBIETE (Int.Cl.6)**

B62D
F16D
F16H

Der vorliegende Recherchenbericht wurde für alle Patentansprüche erstellt

| Recherchenort | Abschlußdatum der Recherche | Prüfer |
|---|---|---|
| DEN HAAG | 24.März 1998 | Kulozik, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

15